# EUROPEAN PATENT APPLICATION

(11) **EP 1 233 548 A1**
(43) Date of publication of application: **21.08.2002**
(21) Application number: 01965602.4
(22) Date of filing: 13.09.2001
(51) Int. Cl.: H04B 7/26

(54) **BASE STATION DEVICE**

(30) Priority: 14.09.2000 JP 2000280007
(71) Applicant: MATSUSHITA ELECTRIC INDUSTRIAL CO., LTD., Kadoma-shi, Osaka 571-8501 (JP)
(72) Inventor: HORIE, Yasuo, Kita-ku, Tokyo 114-0023 (JP)
(74) Representative: Grünecker, Kinkeldey, Stockmair & Schwanhäusser Anwaltssozietät
(86) International application number: JP0107933
(87) International publication number: WO02023769

(57) **Abstract**

By incorporating a channel decoding function and channel coding function into baseband processing means required in a base station apparatus in a mobile communication system of a Code Division Multiple Access (CDMA) method, bus means that requires a great number of signals to collect and multiplex the uplink baseband signals and radio channel status information that travel from a mobile station apparatus to a base station apparatus.

## Description

### Technical Field

The present invention relates to a base station apparatus in a mobile communication system of a CDMA communication method.

### Background Art

CDMA is a communication technique in which the transmitting side multiplies transmission data by a spread code and then transmits the data in frame unit, and in which the receiving side decodes the transmission data by multiplying it by the same spread data. In recent years, furthermore, the construction a mobile communication system with a W-CDMA (Wide Band CDMA) communication technique which accommodates several carriers of varying frequencies is considered.

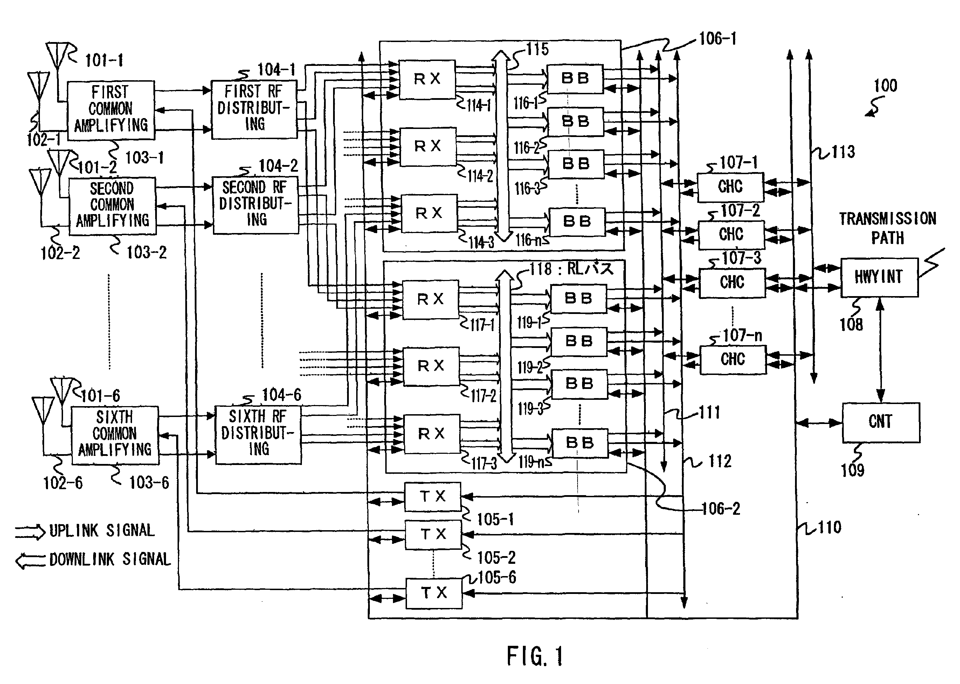

FIG.1 is a block diagram showing an example of the arrangement of a conventional base station apparatus in a CDMA mobile communication system. The base station apparatus shown in FIG.1 is arranged such that, when six sectors accommodate four received carriers, the carrier receiving sections are divided into groups of two, each accommodating two received carriers.

In FIG.1, two antennas 101-1 and 102-1, 101-2 and 102-2, ... 101-1 and 102-1 each perform diversity-reception in their corresponding sectors of the six sectors and thereafter output the radio frequency (RF) received signals of a number of carriers received from a mobile station apparatus to a corresponding section of the first to sixth common amplifying sections 103-1∼103-6. Moreover, two antennas 101-1 and 102-1, 101-2 and 102-2, ... 101-6 and 102-6 each, in their corresponding sectors of the six sectors, transmit by radio the RF transmission signals of a plurality of carriers input from the corresponding ones of the first to sixth common amplifying sections 103-1 ∼ 103-6.

The first to sixth common amplifying sections 103-1∼103-6 all respectively amplify input RF received signals per antenna and output each to corresponding a one of the first to sixth RF distributing sections 104-1 to 104-6. Moreover, the first to sixth common amplifying sections 103-1 ∼303-6 each amplify the RF transmission signals input from the corresponding ones of transmission sections (TX sections) 105-1∼105-6 and output them to corresponding antennas.

On the conditions that one of two inputs is the first RF received signal and the other is the second RF received signal, the first to sixth RF distributing sections 104-1∼104-6 each divide them into two, output one of the divided first RF received signal and second RF received signal to receiving sections (RX sections) 114-1∼114-3 in the first carrier receiving sections 106-1∼106-3, and outputs the other first RF received signal or second RF received signal to receiving sections (RX sections) 117-1∼117-3 in the second carrier receiving sections 106-2.

The first carrier receiving section 106-1 and second carrier receiving section 106-2 are meant to simplify the groups that perform the baseband processing of received carriers, four of which base station 100 accommodates and which are divided into groups of two.

In other words, in the first carrier receiving section 106-1, the above RX sections 114-1∼114-3, reverse link bus (RL bus), and base-band processing sections (BB sections) 116-1∼116-n are allotted to one group. Similarly, in the second carrier receiving section 106-2, the above RX section 117-1 ∼117-3, RL bus118, and BB sections 119-1∼119-n are allotted to one group.

RX sections 114-1∼114-3 and RX sections 117-1 ∼117-3 each have a receiving function for two sectors of two received carriers, convert the first RF received signal or the second RF received signal, which is the diversity-reception signal of the two received carriers, into a digital received signal, and then output it to RL bus 115 and 118.

RL bus 115 and 118 collect the digital received signals received from RX sections 114-1∼114-3 and RX sections 117-1∼117-3. In other words, uplink signals from an unshown base station to base station 100 are collected, which are then all synchronously transmitted to BB sections 116-1∼116-n and BB sections 119-1∼119-n.

BB sections 116-1∼116-n and BB sections 119-1 ∼119-n have a synchronization function, RAKE reception demodulation function, and transmission power control function. With the synchronization function and RAKE reception demodulation function, the signals in the uplink radio channels on one received carrier are converted into uplink baseband signals and then output to RBC bus 111. Furthermore, with the transmission power control function, the transmission power information is output to forward link bus (FL bus) 112.

On RBC bus 111, uplink baseband signals and radio channel status information are exchanged between all of BB sections 116-1∼116-n and BB sections 119-1∼119-n, and all of channel coding sections (CHC sections) 107-1∼107-n.

On FL bus 112, the transmission power information from BB sections 116-1∼116-n and BB sections 119-1∼119-n and the downlink baseband signals from CHC sections 107-1∼107-n are each synchronously transmitted to the above TX sections 105-1∼105-6.

CHC sections 107-1∼107-n have a channel coding function/channel decoding function and radio channel status measuring function. With the channel coding function/channel decoding function, baseband signals and main signals are converted in terms of both uplink and downlink signals. Furthermore, with the radio channel status measuring function, the status information of each radio channel used by each transmission power function is transmitted to BB sections 116-1∼116-n and BB sections 119-1∼119-n via RBC bus 111.

Transmission path interface section (HWYINT section) 108 has a function that relays main signals between a transmission path and BB sections 116-1 ∼ 116-n and BB sections 119-1 ∼ 119-n using transmission path bus 113, and that relays call control information and operation management information exchanged over a transmission path to control section (CNT section) 109.

CNT section 109 performs, via control bus 110, the resource allotment and release control for each section of the apparatus that accompany the call control and hand-off control, as well as the monitoring and controlling of the operation status of each section of the apparatus.

Next, the operation of base station 110 with such an arrangement will be described.

In terms of uplink signals, the RF received signals of a plurality of carriers received synchronously by antennas 101-1 and 102-1∼101-6 and 102-6 are received and amplified together in the first to sixth common amplifying sections 103-1 ∼103-6. From RF distributing sections 104-1∼104-6, then, the RF received signals after the amplification are distributed to RX sections 114-1 ∼114-3 in the first carrier receiving section 106-1 and to RX sections 117-1∼117-3 in the second carrier receiving section.

RX sections 114-1∼ 114-7 are preset by CNT 109 to process only the first and third received carriers, whereas RX sections 117-1∼117-7 are preset by 109 to process only the second and fourth received carriers.

The RF received signals of the first and third received carriers are, by the receiving function of RX sections 114-1∼114-3, converted into digital received signals per diversity reception, and then transmitted to RL bus 115.

BB sections 116-1∼116-n take in the digital received signals of both directions received by diversity reception in all sectors that flow on RL bus 115, and, using the synchronization function and RAKE reception demodulation function, reproduce the baseband signals per uplink radio channel and output it to RBC bus 111.

On the other hand, BB sections 116-1∼116-n, with the transmission power control function, output the downlink transmission power information of the relevant radio channel to FL bus 112.

CHC sections 107-1∼107-n extract the uplink baseband signals of the relevant radio channel from RBC bus 111, and using the channel decoding function, convert them into main signals and transmit them to HWY bus 113.

With the radio channel status measuring function in CHC sections 107-1∼107-n, the channel status information obtained during the channel decoding process is transmitted to BB sections 116-1 ∼ 116-n and BB sections 119-1 ∼ 119-n that accommodate the radio channels via RBC bus 111. The main signals output to HWY bus 113 are relayed and transmitted to a transmission path by HWYINT section 108.

Thus in terms of uplink signals, the RF received signals of the second and fourth received carriers travel through RX sections 117-1∼117-3, RL bus 118 and BB sections 119-1∼119-n, and through common RBC bus 111 and FL bus 112, and then input to CHC sections 107-1∼107-n.

Therefore, CHC sections 107-1∼107-n become a resource common between both uplink baseband signals in the radio channels on the first and third reception carriers and the downlink baseband signals in the radio channels on the second and fourth received carriers.

On the other hand, in terms of downlink signals, the downlink main signals that HWYINT section 108 receives from a transmission path are input to CHC sections 107-1∼107-n via HWY bus 113. CHC sections 107-1∼107-n convert the main signals into downlink baseband signals by the channel coding processing under the channel coding function and then output these to FL bus 112.

Furthermore, with the transmission power control information of the first carrier receiving section 106-1 and second carrier receiving section 106-2, the transmission power information of the downlink radio channels is output to FL bus 112.

The downlink baseband signals and transmission power information on FL bus 112 are synchronously transmitted to TX sections 105-1 ∼105-6 of all sectors. TX sections 105-1∼105-6 in one or a plurality of sectors that accommodate the radio channels, by the transmission modulation function, convert the downlink baseband signals into RF transmission signals without distinguishing them by transmission carriers, and adjust the transmission level by the transmission power information, and , furthermore, superpose the RF received signals of all radio channels on a per carrier basis and, after combining a plurality of carriers, transmit these to the first to sixth common amplifying sections 103-1∼103-6.

The RF transmission signals input to the first to sixth common amplifying sections 103-1∼103-6 are amplified together and transmitted by radio from antennas 101-1 and 102-1∼101-6 and 102-6.

Thus, according to a conventional base station 100, the uplink baseband signals and radio channel status information exchanged between BB sections 116-1116-n and BB sections 119-1∼119-n in the first carrier receiving section 106-1 and second carrier receiving section 106-2, and CHC sections 107-1∼107-n are all transmitted on common RBC bus 111.

The downlink baseband signals and transmission power information that CHC sections 107-1∼107-n and BB sections 116-1∼116-n and BB sections 119-1∼119-n in the first carrier receiving section 106-1 and second carrier section 106-2 transmit to TX sections 105-1∼105-6 are all transmitted on common FL bus 112.

However, in this conventional base station apparatus, all uplink base and signals and all radio channel status information are exchanged via FL bus 112 between BB sections 116-1∼116-n and BB sections 119-1∼119-n, and CHC sections 107-1∼ 107-n, and because of this, the signal transmission capacity of RBC bus 111 has to be enhanced to increase the number of radio channels to accommodate. Problem here is difficulty in the mechanization techniques for collecting high-speed digital signals in a bus form.

Furthermore, in this conventional base station apparatus, all downlink baseband signals and all transmission power information are transmitted via FL bus 112 between BB sections 116-1 ∼116-n/BB sections 119-1∼119-n, CHC sections 107-1 ∼ 107-n, and TX sections 105-1 ∼ 105-6. Problem here is that it is difficult to control and switch signal transmission methods synchronously with the symbol rate doubling of the downlink radio channels in a compressed mode.

### Disclosure of Invention

The present invention aims to collect a plurality of high-speed digital signals in a bus form and mechanize this in a simplified arrangement.

The above aim is achieved by incorporating a channel decoding function and channel coding function into baseband processing means required in a base station apparatus in a mobile communication system of a CDMA communication method and by thus discarding the bus means that requires a great number of signals to collect and multiplex uplink the baseband signals and channel status information that travel from a mobile station apparatus to a base station apparatus.

### Brief Description of Drawings

FIG.1 is a block diagram showing the arrangement of a conventional base station apparatus;
FIG.2 is a block diagram showing the arrangement of the base station according to an embodiment of the present invention; and
FIG.3 is a pattern diagram sowing the signal form and mode of signal transmission on DL bus (second bus means).

### Best Mode of Embodiment

With reference to the accompanying drawings now, the embodiment of the present invention will be described in detail.

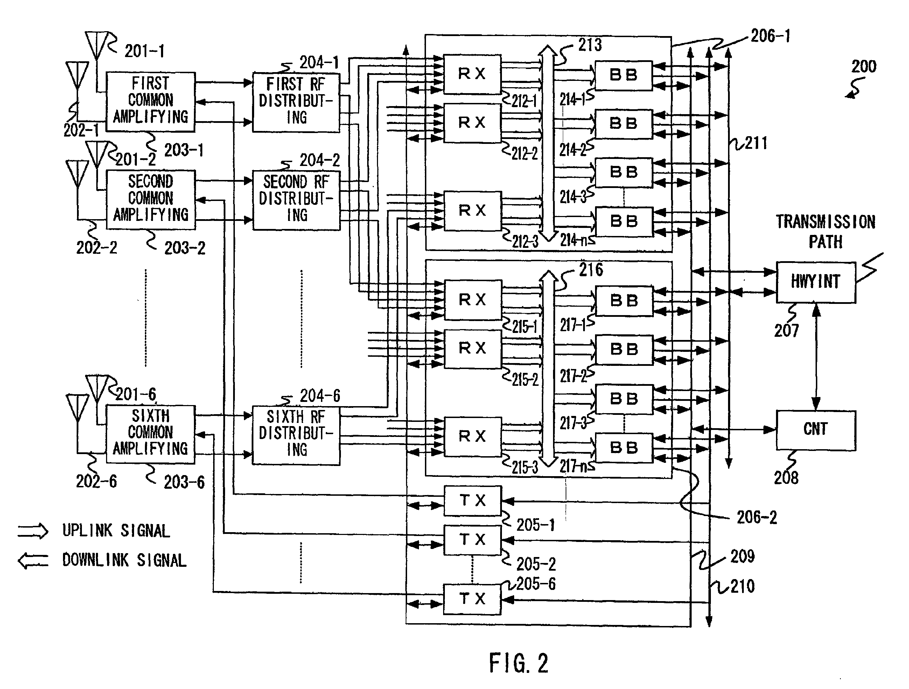

FIG.2 is a block diagram showing the arrangement of a base station apparatus according to an embodiment of the present invention. The base station apparatus shown in FIG.2 according to the present embodiment shows an example of arrangement where, when six sectors accommodate four received carriers, the carrier receiving sections are divided into groups of two, each accommodating two receiving carriers.

In the base station according to the present embodiment shown in FIG.2, the channel coding sections (CHC sections) in the conventional arrangement are cut off by incorporating their function into baseband processing sections 214-1 ∼ 214-n and 217-1 ∼ 217-n that are baseband processing means, so that the bus that was formerly necessary to connect the baseband processing sections to the channel coding sections is unnecessary. Also, downlink bus (DL bus) 210 is provided for the second bus means, which simplifies the signal exchanges between BB sections 214-1 ∼ 214-n and 217-1 ∼ 217-n, and transmitting sections (TX sections) 205-1∼205-6 for carrier transmitting means.

In FIG.2, two antennas 201-1 and 202-1, 201-2 and 202-1,..., 201-6 and 202-6 each perform diversity-reception in their corresponding sectors of six sectors and thereafter output the RF received signals of a plurality of received carriers to the corresponding ones of the first to sixth common amplifying sections 203-1∼203-6. Moreover, two antennas 201-1 and 202-1, 201-2 and 202-1, ..., 201-6 and 202-6 each, in their corresponding sectors of the six sectors, transmit by radio the RF transmission signals of a plurality of carriers input from the corresponding ones of the first to sixth common amplifying sections 103-1 ∼103-6.

The first to sixth common amplifying sections 203-1∼203-6 all respectively amplify input RF signals per antenna and output each to a corresponding one of the first to sixth RF distributing sections 204-1∼204-6. Furthermore, the first to sixth common amplifying sections 203-1 ∼203-6 each amplify the RF transmission signals input from the corresponding ones of TX sections 205-1∼205-6 and output these to corresponding antennas.

On the conditions that one of two inputs is the first RF received signal and the other is the second RF received signal, the first to sixth RF distributing sections 204-1∼204-6 each divide them into two, output one of the divided first RF received signal and second RF received signal to receiving sections (RX sections) 212-1∼212-3 provided for receiving means in the first carrier receiving sections 206-1 for carrier receiving means, and output the other, first RF received signal or the second RF received signal to receiving sections (RX sections) 215-1∼215-3 in the second carrier receiving sections 206-2 for carrier receiving means.

The first carrier receiving section 206-1 and second carrier receiving section 206-2 are meant to simplify the groups that perform the baseband processing of received carriers, four of which base station 200 accommodates and which are divided into groups of two.

In other words, in the first carrier receiving section 206-1, the above RX sections 212-1∼212-3, uplink bus (UL bus) 213 for the first bus means, and BB sections 214-1∼214-n are allotted to one group. Also, in the second carrier receiving section 206-2, the above RX section 215-1∼215-3, uplink bus (UL bus) 216, and BB sections 217-1 ∼217-n are allotted to one group.

RX sections 212-1∼212-3 and RX sections 215-1 ∼215-3 each have a receiving function for two sectors of two received carriers, convert the first RF received signal or the second RF received signal, which is the diversity-reception signal of the two received carriers, into a digital received signal, and output it to UL bus 213 and 216.

UL bus 213 and 216 collect the digital received signals received from RX sections 212-1∼212-3 and RX sections 215-1∼215-3. In other words, uplink signals from an unshown base station to base station 200 are collected, which are then all synchronously transmitted to BB sections 214-1∼214-n and BB sections 217-1∼217-n.

BB sections 214-1∼214 n and BB sections 217-1 ∼ 217-n have a synchronization function, RAKE reception demodulation function, and transmission power control function. With the synchronization function and RAKE reception demodulation function, the signals in the uplink radio channels on one received carrier are converted into uplink baseband signals.

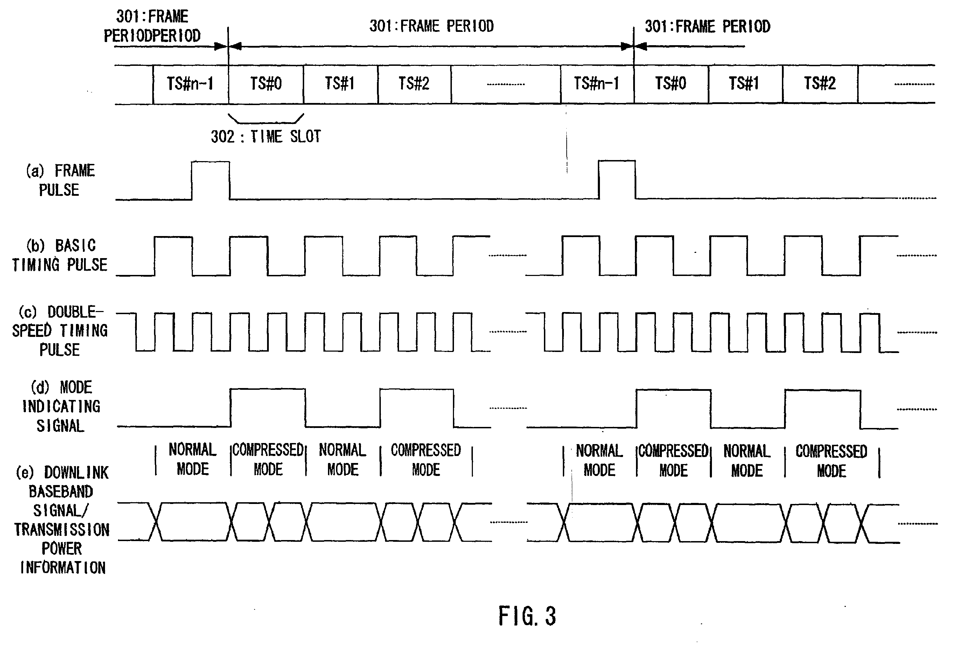

In addition, in this embodiment, BB sections 214-1∼214-n and BB sections 217-1∼217-n have a channel coding function/channel decoding function and radio channel status measuring function. By the channel decoding function, uplink baseband signals and main signals are converted. By the radio channel status measuring function, the radio channel status is determined. With the transmission power control function, the transmission power information based thereon is generated and output to corresponding time slots (see FIG.3) on DL bus 210. DL bus 210 synchronously transmits the baseband signals and transmission power information from BB sections 214-2∼214-n and from BB sections 217-1∼217-n to TX sections 205-1∼205-6.

Transmission path interface section (HWYINT section)207 has the function of relaying main signals between a transmission path and BB sections 214-1∼214-n and BB sections 217-1∼217-n using HWY bus 211 and of relaying call control information and operation management information exchanged via the transmission path to control section (CNT section) 208.

CNT section 208 performs, via control bus 209, the resource allotment and release control for each section of the apparatus that accompany the call control and hand-off control, as well as the monitoring and controlling of the operation status of each section of the apparatus.

FIG.3 is a pattern diagram showing the signal form and mode of signal transmission on DL bus (second bus means). In FIG.3, frame period 301 consists, for example, of n time slots 302 from TS#0∼TS#n-1. The time position of the head of frame period 301 is shown in frame pulse (a). Similarly, the time positions of n time slots are shown in basic timing pulse (b).

The normal mode and compressed mode are switched by mode instructing signals (d), for which the double-speed timing pulse is provided.

In other words, in the normal mode, the mode indicating signals indicate that it is in normal mode, while fixed-length downlink baseband signals and transmission power information (e) are synchronized with the basic timing pulse (b) and then transmitted onto corresponding time slots 302 on a per frame period 301 basis. By this means, when the symbol rate of the downlink radio channels is high, a number of time slots are exclusively occupied so that the signal transmission speed required by the downlink radio channels can be determined.

On the other hand, in the compressed mode, the mode indicating signals (d) indicate that it is in the compressed mode, while length-fixed downlink baseband signals and transmission power information (e) are synchronized with the basic timing pulse and double-speed timing pulse and then transferred onto corresponding time slots 302 on a per frame period 301 basis.

In comparison with the arrangement in FIG.2, BB sections 214-1∼214-n or BB sections 217-1∼217-n in FIG.2 synchronize downlink baseband signals and transmission power information (e) with the basic timing pulse (b) and double-speed timing pulse (c) and then transmit these onto DL bus 210. The mode indicating signals (d) also, on a per time slot basis, are synchronized with the time slots corresponding to BB sections 214-1∼ 214-n or BB sections 217-1∼217-n that transmit the downlink base band signals and transmission power information (e), and then transmitted.

One or more of TX sections 205-1∼205-6 into which downlink baseband signals and transmission power information (e) are input determines as to whether the signals on these time slots are in the normal mode or in double-speed mode, using the mode indicating signal (d), selects either one of the basic timing pulse (b) or double-speed timing pulse (c), and obtain the synchronization timings for signal reception.

Next, the operation of the base signal of the above arrangement will be explained with FIG.2.

In terms of uplink signals, the RF received signals of a plurality of carriers received synchronously fromantennas 201-1 and 202-1∼201-6 and 202-6 are received and amplified together in the first to sixth common amplifying sections 203-1 ∼203-6. From RF distributing sections 204-1∼204-6, then, the RF received signals after the amplification are distributed from RF distributing sections 204-1∼204-6 to RX sections 212-1∼212-3 in the first carrier receiving section 206-1 and to RX sections 215-1∼215-3 in the second carrier section 206-2.

RX sections 212-1∼212-3 are preset by CNT 208 to process only the first and third received carriers, whereas RX sections 215-1∼215-3 are preset by CNT 208 to process only the second and fourth received carriers.

The RF reception signals of the first and third received carriers are, using the reception function of RX sections 212-1∼212-3, converted into digital received signals per diversity reception and then transmitted to UL bus 213.

BB sections 214-1∼214-n take in the digital received signals of both directions received by diversity reception in all sectors that flow on UL bus 213, and using the synchronization function and RAKE received signal demodulation function, reproduce baseband signals per uplink radio channel.

BB sections 214-1∼214-n, using the uplink channel coding function, convert the reproduced uplink baseband signals into uplink main signals. During this process, the radio channel status measuring function obtains radio channel status information. The uplink main signals are transmitted to HWY bus 211.

Furthermore, BB sections 214-1∼214-n, using the transmission power control function, generate the transmission power information of the downlink radio channels based on the radio channel status information.

The main signals transmitted to HWY bus 211 are relayed and transmitted to a transmission path by HWYINT section 207.

Thus in terms of uplink signals, the RF reception signals of the second and fourth reception carriers travel through rx sections 215-1∼215-3, UL bus 216, and BB sections 217-1 ∼217-n and then input to HWYINT section 207 via common HWY bus 211.

On the other hand, in terms of downlink signals, the downlink main signals that HWYINT section 207 receives from a transmission path are distributed to BB sections 214-1∼214-n or 217-1∼217-n that the first carrier receiving section 206-1 or second carrier receiving section 206-2 correspond to via HWY bus 211. By the channel coding processing under the channel coding function of the corresponding BB sections, then, these signals are converted into downlink baseband signals.

These converted downlink baseband signals are, together with the transmission power information, output to time slots (see FIG.3) on DL bus 210 allotted in advance by CNT section 208.

The downlink baseband signals and the transmission power information on DL bus 210 are transmitted to TX sections 205-1∼205-6 of all sectors. However, only TX sections 205-1∼205-6 of one or a plurality of sectors that accommodate the downlink radio channels convert the downlink baseband signals into RF transmission signals by the reception demodulation signals, and adjust the transmission level with the transmission power information. Subsequently, on a per transmission carrier basis, the RF transmission signals of all radio channels are superposed and, after plurality of carriers are combined, transmitted to common AMP sections 203-1∼203-6.

The RF transmission signals input to the first to sixth common AMP sections 203-1∼203-6 are amplified together, and transmitted by radio from antennas 201-1 and 202-1∼201-6 and 202-6.

Thus, with base station 200 of the present embodiment, taking the first carrier receiving section 206-1 for example, by a number of RX sections 212-1∼212-3 necessary for the diversity reception of all sectors of two received carriers, the RF received signals of both directions received by diversity reception of two received carriers are converted into digital received signals per sector. The converted digital received signals are collected by single UL bus 213 and then input to a plurality of BB sections 214-1∼214-n necessary to accommodate all the uplink radio channels on two received carriers.

By performing the RAKE reception amplification processing based on the synchronization processing and maximum ratio combination on the uplink radio channels of the same received carriers, BB sections 214-1∼214-n produce uplink baseband signals per radio channel and furthermore perform the transmission power control processing per uplink radio channel and output downlink transmission power information.

Here BB sections 214-1∼214-n have a channel decoding function which, with respect to uplink baseband signals, performs the de-interleave processing, and error detection and correction decoding processing, and which thereafter performs channel decoding and restores the uplink main signals, and a channel coding function which interleaves downlink main signals by detecting errors and correcting and encoding them and transmits the symbol structures after the channel coding for the downlink baseband signals.

By this means, the relay between uplink baseband signals and radio channel status information, which conventionally have been done by collecting and multiplexing using bus means (RBC bus), can be processed in BB sections 214-1∼214-n, so that the bus means (RBC bus) that requires a great number of signals can be cut off, and the mechanization techniques for collecting signals in a bus form can be realized more simply.

Also, in base station apparatus 200, TX sections 205-1 ∼ 205-6 convert the downlink baseband signals into RF transmission signals and, after adjusting the transmission level per radio channel with transmission power information, superpose the RF transmission signals of all radio channels per transmitting carrier, and, furthermore, perform the transmission processing where a plurality of carriers are superposed, all synchronously per plurality of sectors.

In contrast to these 205-1∼205-6, BB sections 214-1∼214-n and BB sections 217-1∼217-n collect and multiplex the downlink baseband signals and transmission power information into single DL bus 210 and transmit them synchronously.

Here, DL bus 210 is arranged into a simplified arrangement where the basic symbol rate is synchronized with frame period 301, and where the frame period is time-divided by time slots 302, so that the number of signals on DL bus 210 which is the second bus means can be decreased and the mechanization techniques for collecting signals in a bus form can be realized more simply.

According to the base station apparatus 200 of the present embodiment, furthermore, using the frame pulse (FIG.3 (a)) that indicates the frame period, basic timing pulse FIG.3 (b)) that indicates the time slot period synchronized with the frame period, double-timing pulse (FIG.3 (c)) that has the speed double the basic timing pulse, and mode indicating signals that select and indicate which one of the basic timing signal or double-speed timing pulse to use, irrespective of the normal mode or compressed mode, the downlink baseband signals and transmission power information can be exchanged on DL bus 210 using the same time slots.

With the above, the switching of the normal mode and compressed mode that accompany the control over signal exchanges between BB sections 214-1 ∼ 214-n and BB sections 217-1 ∼ 217-n, and TX sections 205-1∼205-6 can be performed more simply.

The present invention is not limited to the above embodiment, and embodiments of various patterns are possible.

The base station according to the present invention in a mobile communication system of a Code Division Multiple Access (CDMA) method employs an arrangement where the base station has m (m≦M) of carrier receiving means to which more than one received carrier received in diversity reception by M sectors is distributed, and where these m careers each have
receiving means disposed in a number necessary to process a plurality of received signals received in diversity reception by the M sectors and performing conversion processing per sector by which a plurality of received signals received from a mobile station apparatus in diversity reception are individually converted into digital received signals,
baseband processing means disposed in a number necessary
to accommodate all the radio channels in all the received carriers that correspond to the carrier receiving means, and
single first bus means that transmits the output of said receiving means to said baseband processing means,
and said baseband processing means further comprising, in addition to a synchronization function and RAKE reception demodulation function that generate uplink baseband signals from digital received signals and a transmission power control function that outputs transmission power information by means of transmission power control processing per uplink radio channel, a channel decoding function that generates main signals from uplink baseband signals, and a channel coding function that generates downlink baseband signals from downlink main signals.

In this arrangement, the baseband processing means are provided with both channel decoding function that performs channel decoding of uplink baseband signals and reproduce uplink main signals and channel coding function that performs channel coding of downlink main signals and generate downlink baseband signals, so that the bus means that requires a great number of signals to transmit uplink baseband signals and radio channel status information by collecting and multiplexing these becomes unnecessary. Therefore, the mechanization techniques for collecting a great number of high-speed digital signals in a bus form can be realized more simply.

The base station apparatus according to the present invention employs an arrangement where the base station has the second bus means which transmits the output of all the baseband processing means of m career receiving means to career transmitting means that synchronously perform the transmission processing of downlink baseband signals per plurality of sectors.

According to this arrangement, all the downlink baseband signals and transmission power information output from all the baseband processing means of m carrier receiving means are collected and multiplexed and then synchronously conveyed on the second bus means, so that all the carrier transmitting means can, synchronously, receive the transmission power information of optional downlink baseband signals and the radio channels corresponding thereto.

The base station apparatus according to the present invention employs an arrangement where m carrier receiving means have control means by which the signal form for the downlink baseband signals and transmission power information that all baseband processing means transmit to the second bus means is configured such that the basic symbol rate is synchronized with the frame period and the frame period is time-divided by a plurality of time slots, and by which more than one time slot is allotted based on the symbol rate of downlink baseband signals.

According to this arrangement, the number of signals on the second bus means decreases so that the mechanization techniques for collecting a great number of high-speed signals in a bus form can be realized more simply.

The base station apparatus according to the present invention employs an arrangement where m carriers have transmitting means which
transmit mode indicating signals that select and instruct as to which of the timing pulse or double-speed timing pulse to use to the carrier receiving means via the second bus means per frame pulse and time slot, the frame pulse indicating the frame period,
transmit in the normal mode the basic timing pulse indicating the time slot period synchronized with the frame period and transmit the output of the baseband processing means synchronously with the basic timing pulse onto corresponding time slots, and which
transmit in the compressed mode the double-speed timing having the speed double the basic timing pulse synchronously with the basic timing pulse and transmit the output of the baseband processing means synchronously with the double-speed timing pulse onto corresponding time slots.

By this arrangement, the switching control of the normal mode and compressed mode in the second bus means can be done more simply.

The base station according to the present invention employs an arrangement where m carrier receiving means, when the communicating downlink radio channels that the baseband processing means transmit to the second bus means shift from the normal mode to compressed mode and the symbol rate doubles, instruct the carrier transmitting means at the corresponding receiving ends of time slots using the mode instruction signals, and transmit at the same time downlink baseband signals and transmission power information to the time slots using the double-timing pulse, and wherein carrier receiving means determine by detecting the mode instruction signals of the time slots as to whether the downlink baseband signals and transmission power information on the time slots are received synchronously with the basic timing pulse or with the double-speed timing pulse.

By this arrangement, even when the symbol rate temporarily doubles in downlink radio channels in a compressed mode, the allotted time slots can be used as they are, so that when the normal mode shifts to a compressed mode, the control over signal exchanges between the baseband processing means and carrier receiving means can be done more simply and more quickly.

As described above, with the base station apparatus according to the present invention, a great number of high-speed digital signals can be arranged into a bus form in a relatively simple configuration. Furthermore, with this base station apparatus, the control of signal exchanges can be done synchronously with the symbol rate doublings in downlink radio channels in a compressed mode.

This application is based on Japanese Patent Application No. 2000-280007 filed on September 14, 2000, entire content of which is expressly incorporated by reference herein.

## Claims

1. A base station apparatus in a mobile communication system of a Code Division Multiple Access (CDMA) method, having m (m≦M) carrier receiving means to which more than one received carrier received in diversity reception by M sectors is distributed, said m carriers each comprising,
receiving means disposed in a number necessary to process a plurality of received signals received in diversity reception by the M sectors and performing conversion processing per sector by which a plurality of received signals received from a mobile station apparatus in diversity reception are individually converted into digital received signals,
baseband processing means disposed in a number necessary to accommodate all the radio channels in all the received carriers that correspond to the carrier receiving means, and
single first bus means that transmits the output of said receiving means to said baseband processing means,
and said baseband processing means further comprising, in addition to a synchronization function and RAKE reception demodulation function that generate uplink baseband signals from digital received signals and a transmission power control function that outputs transmission power information by means of transmission power control processing per uplink radio channel, a channel decoding function that generates main signals from uplink baseband signals and a channel coding function that generates downlink baseband signals from downlink main signals.

2. The base station apparatus according to Claim 1, having second bus means that transmits the output of all the baseband processing means of m career receiving means to career transmitting means that synchronously perform the transmission processing of downlink baseband signals per plurality of sectors.

3. The base station apparatus according to claim 2, wherein m carrier receiving means have control means by which the signal form for the downlink baseband signals and transmission power information that all baseband processing means transmit to the second bus means is configured such that the basic symbol rate is synchronized with the frame period and the frame period is time-divided by a plurality of time slots, and by which more than one time slot is allotted based on the symbol rate of downlink baseband signals.

4. The base station apparatus according to claim 3, wherein m carriers have transmitting means which
transmit mode indicating signals that select and instruct as to which of the timing pulse or double-speed timing pulse to use to the carrier receiving means via the second bus means per frame pulse and time slot, the frame pulse indicating the frame period,
transmit in the normal mode the basic timing pulse indicating the time slot period synchronized with the frame period and transmit the output of the baseband processing means synchronously with the basic timing pulse onto corresponding time slots, and which
transmit in the compressed mode the double-speed timing pulse having the speed double the basic timing pulse synchronously with the basic timing pulse and transmit the output of the baseband processing means synchronously with the double-speed timing pulse onto corresponding time slots.

5. The base station apparatus according to claim 4, wherein m carrier receiving means, when the communicating downlink radio channels that the baseband processing means transmit to the second bus means shift from the normal mode to compressed mode and the symbol rate doubles, instruct the carrier transmitting means at the corresponding receiving ends of time slots using the mode instruction signals, and transmit at the same time downlink baseband signals and transmission power information to the time slots using the double-timing pulse, and wherein carrier receiving means determine by detecting the mode instruction signals of the time slots as to whether the downlink baseband signals and transmission power information on the time slots are received synchronously with the basic timing pulse or with the double-speed timing pulse.
